# EUROPEAN PATENT APPLICATION

(11) **EP 4 464 887 A1**
(43) Date of publication of application: **20.11.2024**
(21) Application number: 23305799.1
(22) Date of filing: 17.05.2023
(51) Int. Cl.: F03B 11/04, F03B 3/12

(54) **HYDROTURBINE PIECE OF A TURBINE COMPRISING A MODIFIED TRAILING EDGE**

(71) Applicant: GE Renewable Technologies, 38100 Grenoble (FR)
(72) Inventor: FLORES, Emmanuel, 38041 GRENOBLE (FR); PAPILLON, Benoit, QUEBEC, J4Z 0N5 (CA); BORNARD, Laurent, QUEBEC, J4Z 0N5 (CA); LOWYS, Pierre-Yves, QUEBEC, J4Z 0N5 (CA)
(74) Representative: Brevalex

(57) **Abstract**

The invention concerns a hydraulic component or piece of a hydraulic turbine, said component or piece having a pressure side and a suction side which extend between a leading edge (8) and a trailing edge (32), at least one part of the trailing edge comprising a series of patterns (34,44, 54, 64).

## Description

### TECHNICAL FIELD AND PRIOR ART

The invention relates to the field of hydropower industry.

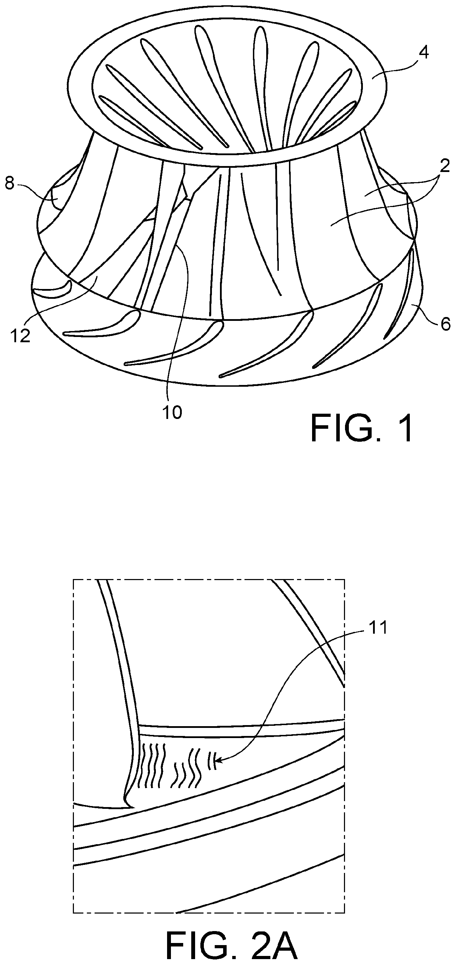

Figure 1 illustrates a known turbine runner, comprising runner blades 2 arranged between a crown 4 and a band 6. Each of these blades extends between a leading edge 8 and a trailing edge 10 from which water flows into a draft tube (not shown on figure 1). The present application applies not only to such turbines (Francis and others) and to turbine-pump runners possessing a crown and a band, but also to those with only a crown or a hub (propeller, or Kaplan, or diagonal flow and others). The invention may also apply to other hydraulic components having a leading edge and a trailing edge, for example stay vanes or butterfly valves.

Von Karman vortices is a phenomenon due to unsteady boundary layers separation at the trailing edge of a profile leading to alternate vortices in the wake of the profile. When the fluid leaves said trailing edge, it turns into a wake that organizes itself into a series of vortices. The frequency of Karman vortices depends mainly on thickness and shape of the trailing edge as well as local velocity of the flow. When an eigenfrequency of the profile fits with the Karman vortices, we may have a lock-in between the vortices and the profile, with a resonance leading to noise and amplified vibration of the profile. This phenomenon may induce early fatigue of the profile and cracks.

Karman vortices can be visualized during a model test as shown in figure 2A

Usually, the Karman issue is overcome by a dissymmetrical and locally curved trailing edge (for some particular geometry, this curvature is referred as "Donaldson" shape) and/or a reduction of thickness, see R.M. Donaldson, Hydraulic-Turbine Runner Vibration, 1956, Transactions of the ASME. However, in some cases, despite a Donaldson shape and/or a thickness reduction of the profile shape, resonance of von Karman vortices with the structure may remain.

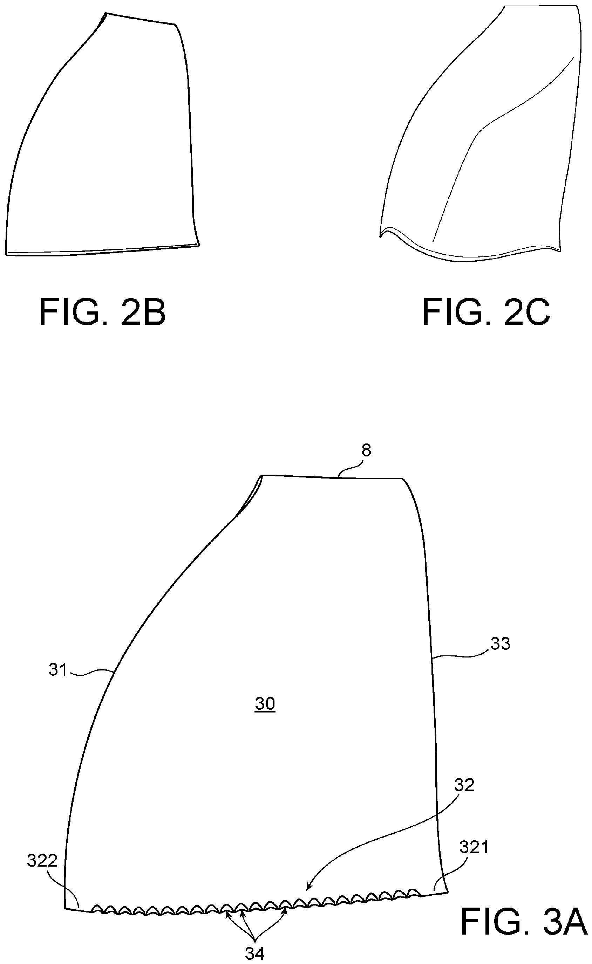

Figures 2B and 2C show conventional trailing edges from hub to shroud of Francis turbines. In recent years, the design of hydraulic machines has evolved in order to further improve their performance. As a result, some hydraulic machines have been designed with thinner or more flexible blades. The inventors have found that in some cases, the profiles of a trailing edge according to the prior art, as shown on figures 2B and 2C, are no longer sufficient to avoid the problem of Karman vortices as they do not disorganise the von Karman vortices downstream of the trailing edge, which may result in excitation of the blade (or of the hydraulic component) and vibrations or poor dynamic behaviour of the turbine or hydraulic machine. A new design of the trailing edge is required to overcome this limitation of the prior art turbines, which would not cause deterioration of the performance.

There is thus a need to find a new solution to the problem of the von Karman vortices.

There is the same problem with other hydraulic components or pieces of a hydraulic turbine, for example guide vanes or stay vanes or butterfly valves, which are subject to von Karman vortices as explained above for runner blades.

### SUMMARY OF THE INVENTION

The invention proposes a new structure of a trailing edge of a hydraulic component or piece of a hydraulic component, in particular for a hydraulic turbine.

The invention first concerns a hydraulic component or piece of a hydraulic component, in particular for a hydraulic turbine, said component or piece having a pressure side and a suction side which extend between a trailing edge and a leading edge.

According to a first aspect of the invention, said trailing edge comprises at least in part a pattern or a series of patterns, for example waves and/or indentations and/or teeth.

According to the invention, the trailing edge profile is modified to reduce the amplitude of the Karman vortices and disorganise the flow downstream the profile.

The pattern(s) can be located on the whole trailing edge or on only part of it.

According to a second aspect of the invention which can be combined with the first aspect disclosed above, the normal projection of at least a portion, for example 30%, of the pressure side trailing edge on a plane P or P₀, comprises a number, for example at least 4, of local extremum (maximum or minimum), said plane being for example:
- a plane P tangent to the pressure side at a point which is located for example at a distance of between 2% l and 15 % l, for example 5% l, from the trailing edge (l being the length of the piece, measured for example from the middle of the leading edge to the middle of the trailing edge); preferably said point is not within 5% of the trailing edge length from the edges of the piece which connect the trailing and the leading edge;
- or any plane P₀ defined by 3 unaligned points of the pressure side located for example between 2% I and 15 % I, for example 5% I, from the trailing edge; preferably said points are not within 5% of the trailing edge length from the edges of the piece which connect the trailing and the leading edge; such a plane is considered being close to a plane tangent to the pressure side.

Said portion of the trailing edge can be centered on a point O located on the trailing edge, at a distance from an end of said trailing edge of between 5% and 95% of the trailing edge length.

For example, in a Francis runner, the trailing edge length is measured from the junction of the trailing edge with the hub to the junction of the trailing edge with the shroud.

Thus, the invention also concerns a hydraulic component or piece of a hydraulic component, in particular for a hydraulic turbine, said component or piece having a pressure side and a suction side which extend between a trailing edge and a leading edge, the normal projection of at least a portion, for example 30%, of the pressure side trailing edge on a plane P or P₀ comprising a number, for example at least 4, of local extremum (maximum or minimum), said plane being for example:
- tangent to the pressure side at a point which is located at a distance of between 2% I and 15 % I, for example 5% I, from the trailing edge (l being the length of the piece, measured for example from the middle of the leading edge to the middle of the trailing edge); preferably said point is not within 5% of the trailing edge length from the edges of the piece which connect the tailing and the leading edge;
- or which is defined by 3 unaligned points of the pressure side located for example between 2% I and 15 % I, for example 5% I, from the trailing edge, I being the length of the piece, measured for example from the middle of the leading edge to the middle of the trailing edge; preferably said points are not within 5% of the trailing edge length from the edges of the piece which connect the tailing and the leading edge; such a plane is considered being close to a plane tangent to the pressure side.

Preferably, a local extremum E₀ on said curve is taken into account if, and/or only if, the distance d on the trailing edge between E₀ and a neighboring extremum E₁ is in a range between 3 mm and 300 mm (for example for a small turbine, having a turbine diameter of 1m), or between 30 mm and 3000 mm (for example for a large turbine, having a turbine diameter of a 10m diameter) and/or the distance d on the trailing edge between E₀ and E₁ ) is in a range between 3×10⁻³ D and 3×10⁻¹ D, D being the diameter of the runner.

The patterns can be repetitive or periodic.

Alternatively, the patterns are non-repetitive or non-periodic.

Said hydraulic component or piece can for example comprise a runner blade or a stay vane or a guide vane or butterfly valves.

A hydraulic turbine comprising said component or piece is for example of the Francis or Kaplan or diagonal flow type or is a pump-turbine.

The invention also concerns a method for improving the behaviour, in particular the dynamic and vibratory behaviour, of a hydraulic component or piece of a hydraulic component, in particular for a hydraulic turbine, for example a hydraulic component or piece as defined above, said component or piece having a pressure side and a suction side which extend between a trailing edge and a leading edge. The dynamic or vibratory behaviour of said hydraulic component or piece is improved by reducing or suppressing excitation of a turbine or hydraulic component by Von Karman vortices.

Thus, the invention also concerns a method for improving the dynamic and vibratory behaviour of a hydraulic component or piece, in particular for a hydraulic turbine, for example a hydraulic component or piece as defined above, for example a blade or a stay vane or a guide vane, of a hydraulic turbine comprising a trailing edge.

According to a first aspect, a method according to the invention comprises making a series of patterns on at least one part of the trailing edge of said hydraulic component or piece.

Said patterns may for example comprise waves and/or indentations and/or teeth, but is not limited to those patterns.

In a method according to the invention, the patterns can:
- be located on the whole trailing edge or on only part of it;
- and/or have repetitive or periodic patterns or have non repetitive or non-periodic patterns.

Thus, another aspect of the invention concerns a method according to the invention which can be combined with the first aspect of a method according to the invention disclosed above, said method being for improving the behaviour, in particular the dynamic and vibratory behaviour, of a hydraulic component or piece as defined above, said component or piece having a pressure side and a suction side which extend between a trailing edge and a leading edge, said method comprising making or forming a number of local extremum (maximum or minimum) on said trailing edge, such that the normal projection of at least a portion, for example 30%, of the trailing edge on a plane P or P₀ comprises a number, for example at least 4, of local extremum (maximum or minimum), said plane being:
- tangent to the pressure side at a point which is located at a distance of between 2% I and 15 % I, for example 5% I, from the trailing edge (I being the length of the piece, measured for example from the middle of the leading edge to the middle of the trailing edge); preferably said point is not within 5% of the trailing edge length from the edges of the piece which connect the tailing and the leading edge
- or which is defined by 3 unaligned points of the pressure side located for example between 2% I and 15 % I, for example 5% I, from the trailing edge, I being the length of the piece, measured for example from the middle of the leading edge to the middle of the trailing edge; preferably said points are not within 5% of the trailing edge length from the edges of the piece which connect the tailing and the leading edge; such a plane is considered being close to a plane tangent to the pressure side.

Said other aspect of the invention can be combined with the first aspect of a method according to the invention disclosed above.

Thus, the invention also concerns a method for improving the dynamic and vibratory behaviour of a hydraulic component or piece, in particular for a hydraulic turbine, for example a blade or a stay vane or a guide vane, of a hydraulic turbine, said component or piece having a pressure side and a suction side which extend between a trailing edge and a leading edge, said method comprising making or forming a number of local extremum (maximum or minimum) on said trailing edge, such that the normal projection of at least a portion, for example 30%, of the trailing edge on a plane P, comprises a number, for example at least 4, of local extremum (maximum or minimum), said plane P being for example:
- tangent, or close to a plane tangent to, the pressure side at a point which is located at a distance of between 2% I and 15 % l, for example 5% I, from the trailing edge (I being the length of the piece, measured for example from the middle of the leading edge to the middle of the trailing edge), comprises a number, for example at least 4, of local extremum (maximum or minimum); preferably said point is not within 5% of the trailing edge length from the edges of the piece which connect the tailing and the leading edge;
- or being defined by 3 unaligned points of the pressure side located for example between 2% I and 15 % I, for example 5% I, from the trailing edge, I being the length of the piece, measured for example from the middle of the leading edge to the middle of the trailing edge; such a plane is considered being close to a plane tangent to the pressure side; preferably said points are not within 2% of the trailing edge length from the edges of the piece which connect the trailing and the leading edge.

Preferably, a local extremum E₀ is taken into account if, or only if, the distance d along the trailing edge between E₀ and a neighboring extremum E₁ is in a range between 3 mm and 300 mm (for example for a small turbine, having a turbine diameter of 1m, or between 30 mm and 3000 mm (for example for a large turbine, having a turbine diameter of a 10m diameter) and/or the distance d on the trailing edge between 2 neighboring extremum (including E0) is in a range between 3×10⁻³ D and 3×10⁻¹ D, D being the diameter of the runner.

In a hydraulic component or piece of a hydraulic turbine according to the invention or in a method according to the invention, the plurality of extremum can form part of a curve resulting from the above-described projection of said trailing edge.

A method according to the invention can implement a step of grinding and/or smoothing and/or polishing of the trailing edge of said hydraulic component or piece in order to make said patterns and/or said extremum.

In a method according to the invention said turbine is for example of the Francis or Kaplan or diagonal flow type or is a pump-turbine.

### BRIEF DESCRIPTION OF THE FIGURES

- Figure 1 shows a known hydroelectric turbine runner,
- Figures 2A shows Karman vortices during a model test
- Figures 2B - 2C show prior art runner blades
- Figures 3A-3B are 2 views of a 1^{st} example of the trailing edge of a runner blade according to the invention;
- Figures 3C-3I are several views of a trailing edge of an embodiment of a runner blade according to the invention;
- Figure 4 is a view of a variant of the 1^{st} example of a trailing edge according to the invention, wherein the patterns are separated by larger distances than on figures 3A-3C;
- Figures 5A-5D are different views of a 2nd example of the trailing edge of a runner blade according to the invention, wherein the pattern(s) are located on only part of the trailing edge;
- Figures 6A-6D are different views of a 3^{rd} example of the trailing edge of a runner blade according to the invention, wherein the pattern(s) are neither periodic nor identical along the trailing edge;
- Figures 7A-7C and Figures 8A-8C illustrate comparative examples of a trailing edge according to the prior art and according to the invention.
- Figures 9A and figure 9B illustrate a zone S of interest on the pressure side of a blade and figure 9C shows planes tangent to several points in said zone S.

### DETAILED DISCLOSURE OF EMBODIMENTS

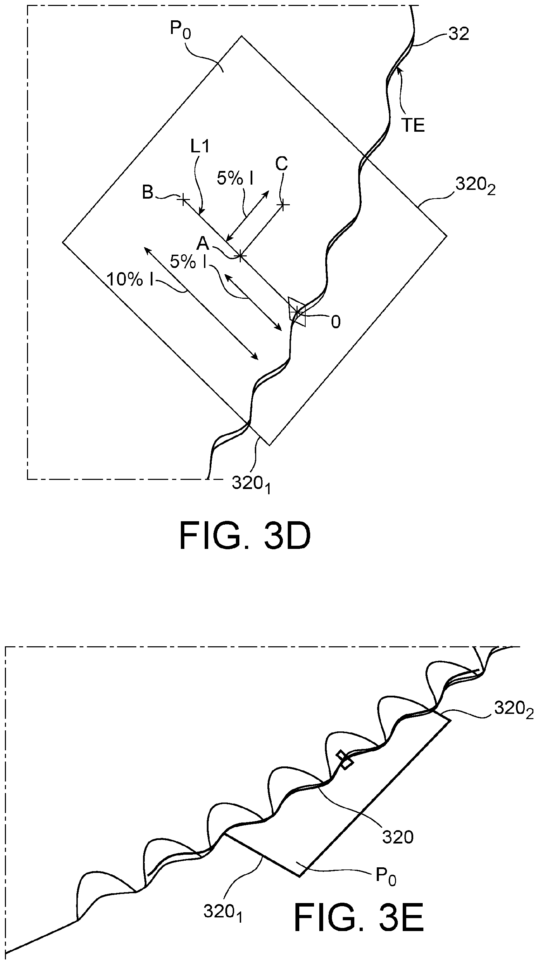

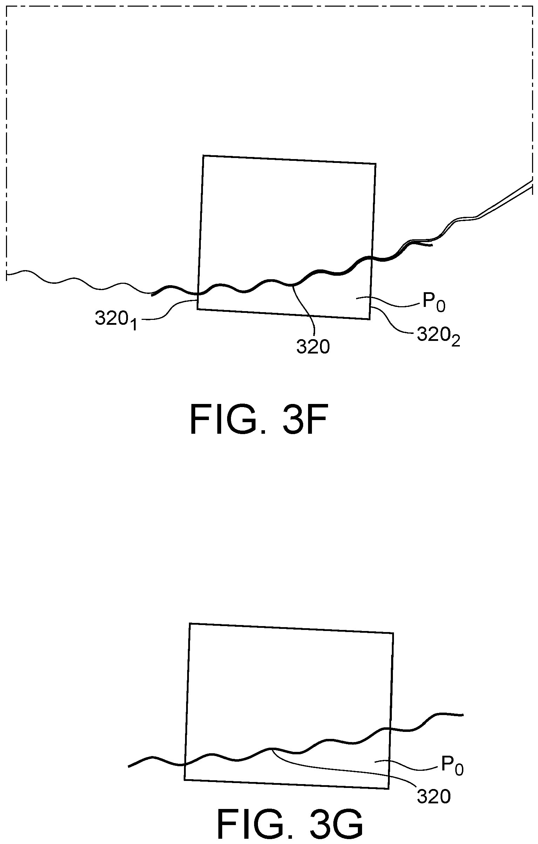

A first example of a blade 30 according to the invention will be explained in connection with figure 3A. It has a leading edge 8 and a trailing edge 32.

This trailing edge 32 comprises a repetitive or periodic series of patterns 34 extending over the whole trailing edge or on at least one part of the trailing edge (except, in this example, on its lateral sides 321 and 322).

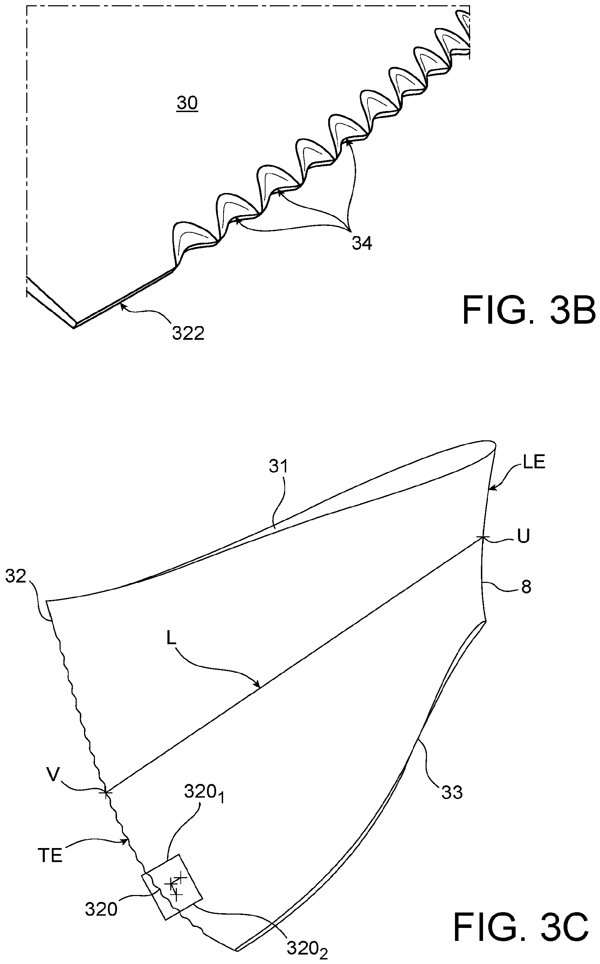

Figure 3B shows a detailed view of this trailing edge.

As can be seen on figure 3C:
- the trailing edge 32 of the pressure side surface of the profile is a curve "TE" limited by the hub 31 and the shroud 33 (more generally the edges of the piece which connect the trailing edge 32 and the leading edge 8);
- and the leading edge 8 of the pressure side surface of the profile is a curve "LE" limited by the hub and the shroud;
- point U on the leading edge 8 is in the middle of the curve LE;
- point V on the trailing edge 32 is in the middle of the curve TE;
- the line joining U and V has a characteristic length I (which can be considered as the length of the blade taken along curve UV).

As can be seen on figure 3D:
- point "O", which is a point along curve "TE" and is preferably located between 5% and 95% of the trailing edge length; see the above consideration about the trailing edge; for example in a Francis runner, the trailing edge length is the length of segment TE, i.e. it is measured from the junction of the trailing edge with the hub to the junction of the trailing edge with the shroud; for any other piece (guide vane, stay vane, butterfly valve etc). of a hydraulic component, the trailing edge may be the downstream edge of said piece with respect to the water flow direction; for example the trailing edge length for a vane is between the upper and the lower ring;
- the intersection between a plane normal to the curve TE at O and the pressure side surface defines a curve L1; L1 is the intersection between a plane and a curved surface, as per figure 3D;
- on curve L1, point A is located at a distance l_{A} of, for example 5% of the length I from point O and B is the point located at a distance l_{B} (l_{B} > I_{A}) of for example 10% of the length I from point O; for any other piece or hydraulic component (guide vane, stay vane, butterfly vane etc), the length I is the length of the piece, for example from the middle point of the leading edge to the middle point of the trailing edge;
- C is the point defined on the pressure side surface at a distance comprised between 2% and 10%, for example5%, of the profile length I from the point A in the normal direction to the curve L1.
- the 3 points A, B, C therefore define a plane P₀; said plane is considered to be close to the pressure side.

More generally, a geometrical plane P₀ can be considered, which is defined by 3 unaligned points of the pressure side located for example between 2% I and 15 % I from the trailing edge, said points being preferably not within 5% of the trailing edge length (or at a distance larger than 5% of the trailing edge length) from the edges 31, 33 of the piece which connect the tailing and the leading edge. For example, one can consider, the plane defined by the above 3 points A, B and C.

Alternatively, a plane P can be considered, which is tangent to the pressure side at a point located between 2% I and 15 % I from the trailing edge (but preferably not close to the ends 31, 33 of the blade, in other words at a distance from said ends of more than 5% of the trailing edge length), I being the length of the piece from the leading edge to the trailing edge; see for example figure 3D where points A and B are located at a distance of 5% from the trailing edge (point A), and 10% from the trailing edge (point B).

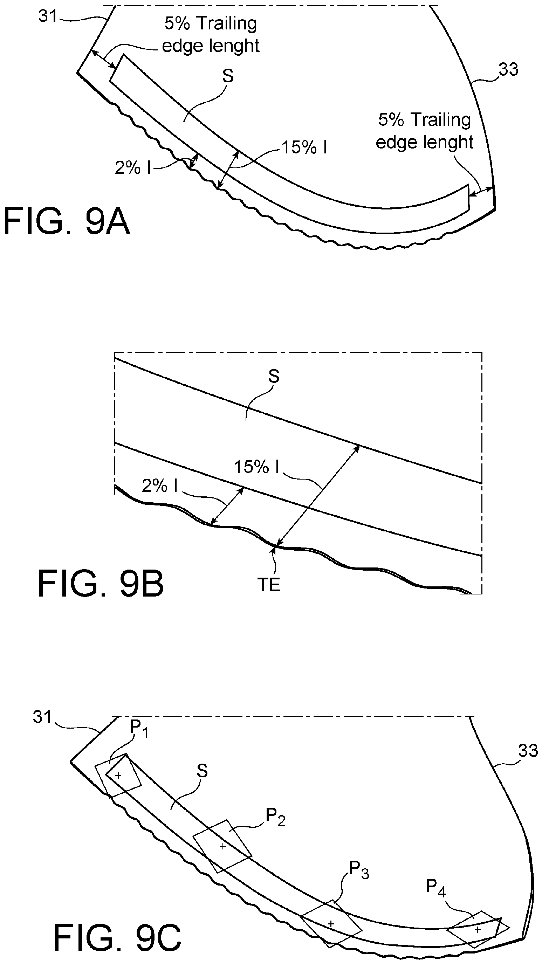

Figures 9A and 9B show a zone S on a pressure side of a runner blade, located between 5% I and 15 % I from the trailing edge (and at a distance of more than 5% of the trailing edge length from the edges 31, 33 of the piece which connect the trailing edge and the leading edge); a similar zone could be identified between 2% I and 15 % I. A plane tangent to the pressure side (like planes P1, P2, P3, P4 of figure 9C (for clarity's sake, Pi just identifies a portion of a plane)) can be defined for any point of the surface S. Points A, B and C mentioned above can be selected from said zone S.

Figure 9A also shows the lateral zones of 5% I .

The normal projection of the pressure side trailing edge 32 on any of said planes P₀ or P is a 2D curve 320.

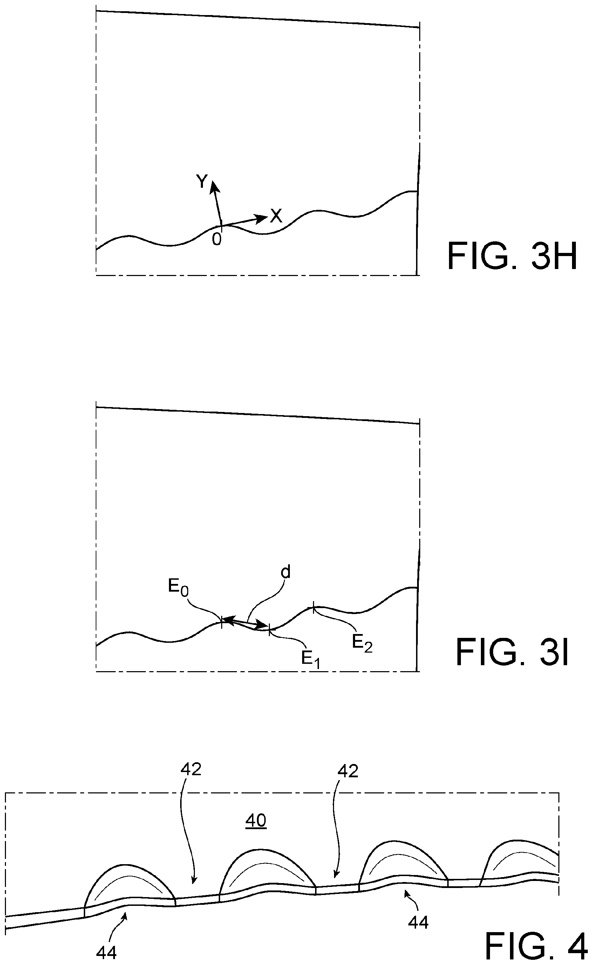

An orthonormal coordinate system (X,Y) is defined in the plane P or P₀ with the point O being the origin and the Y axis pointing towards the trailing edge (see figure 3H).

A curve 320 resulting from the orthogonal projection, on any of the planes P or P₀, of the trailing edge 32, said trailing edge comprising several patterns, presents several local extremum in the coordinate system (X,Y).

According to an aspect of the invention, there are at least 4, for example between 4 and 10 in the curve 320 corresponding to or resulting from the orthogonal projection on the plane P or P0 of at least 30% of the trailing edge length centered around the point O, the point O being located between 5% and 95% of the full length of the trailing edge, for example from hub to shroud in a Francis turbine..

An embodiment of a hydraulic piece or component or of a method according to the above invention can thus comprise the following steps:
- select a point O of the trailing edge, which is located at a distance from one end of said trailing edge between 5% and 95% of said trailing edge length;
- select a portion of the trailing edge centred around O and which length is equal to 30% of the trailing edge length;
- project this portion of the trailing edge on any plane P or P₀ as defined above.

If the orthogonal projection of said portion on said plane has at least 4 local extremum, then the hydraulic piece meets the requirements of the present invention.

It has to be noted that if part of said 30% of the trailing edge centered on O is outside the trailing edge, only the portion of the trailing edge projected on the plane will be considered. For example, if the point O is located at a distance of 5% of the trailing edge length from an end of the trailing edge, then the projection of only 20% of the trailing edge will be considered. In other words, if O is located at x% from an end of the trailing edge, 5 ≤ x < 15, then the projection of only (15+x)% of the trailing edge is considered to decide whether said projection has at least 4 local extremum

As illustrated on figure 3I a local extremum E₀ of said curve can be taken into account only if the distance d between E₀ and a neighboring extremum E₁ is higher than the IEC tolerance (0.1% of the runner diameter) [see for example: IEC60193:2019-04 Ed.3 International Standard - Hydraulic turbines, storage pumps and pump-turbines - Model acceptance tests]. It means that irregularities along the trailing edge resulting from the manufacturing process cannot be considered as forming an extremum. Generally, for a turbine diameter of 1m, the distance d between 2 extremum is in the range 3 mm - 300 mm. For larger turbines, for instance a turbine with a 10m diameter, the distance between 2 extremum is in the range 30 mm - 3000 mm and/or the distance d on the trailing edge between 2 neighboring extremum (including E₀) is in a range between 3×10⁻³ D and 3×10⁻¹ D, D being the diameter of the runner. In other words, d is the distance between 2 extremum on the 2D curve resulting from the normal projection of at least 30% of the trailing edge on a plane P or P0, as defined above.

A variant of a blade 40 according to the invention is shown on figure 4; its trailing edge 42 comprises a repetitive pattern with more space between two neighbouring patterns 44.

It has the above features concerning the patterns and/or the projection of the trailing edge on a plane P or P₀, as defined above: the projection on said plane of 30% of the trailing edge, said 30% being centred on the point O, has at least 4 local extremum (see definition of P, O and of the trailing edge length above).

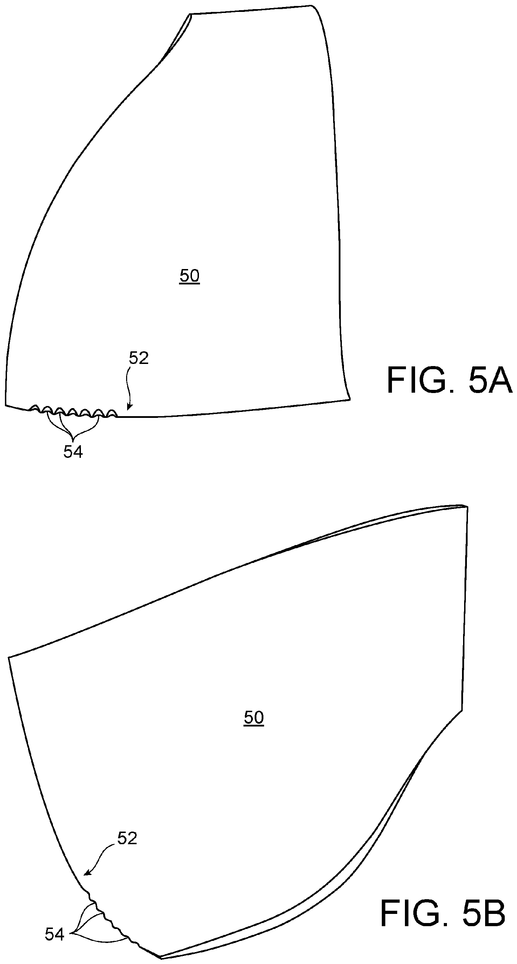

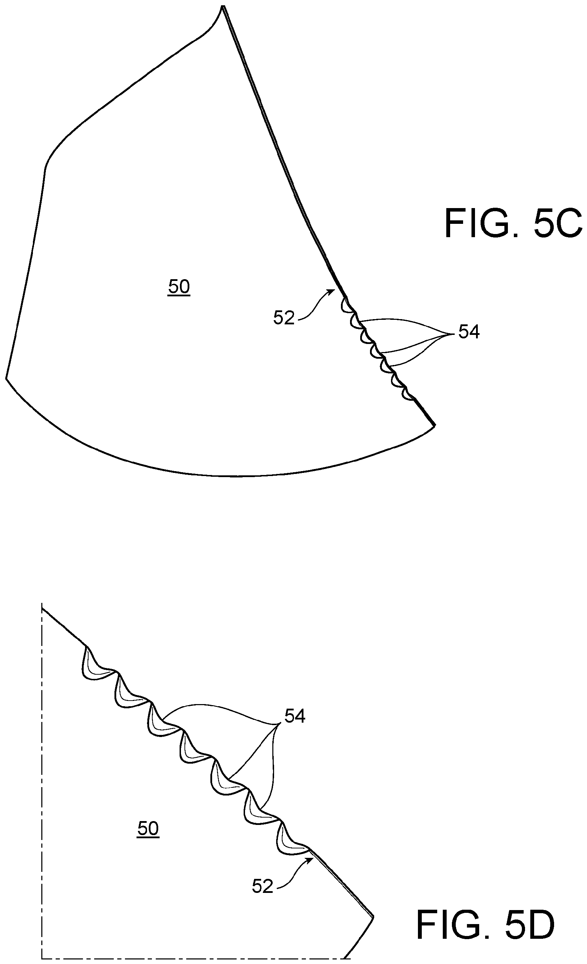

Another example of a blade 50 according to the invention will be explained in connection with figures 5A - 5D: the trailing edge 52 comprises a repetitive or periodic series of patterns 54 extending over only part of the whole trailing edge: there may be Karman vortices at other locations but they do not excite eigenfrequency(ies) of the profile. The locations of the patterns depend on the location where the von Karman excite the eigenfrequency(ies) of the profile. For example, the patterns may extend over one third (or less) of the length of the whole trailing edge; according to another example the patterns could be located in the middle of the trailing edge if resonances are generated by von Karman vortices in the middle of the trailing edge.

The blade 50 of figures 5A - 5D has the above features concerning the patterns and/or the normal projection of the trailing edge on a plane P or P₀, as defined above.

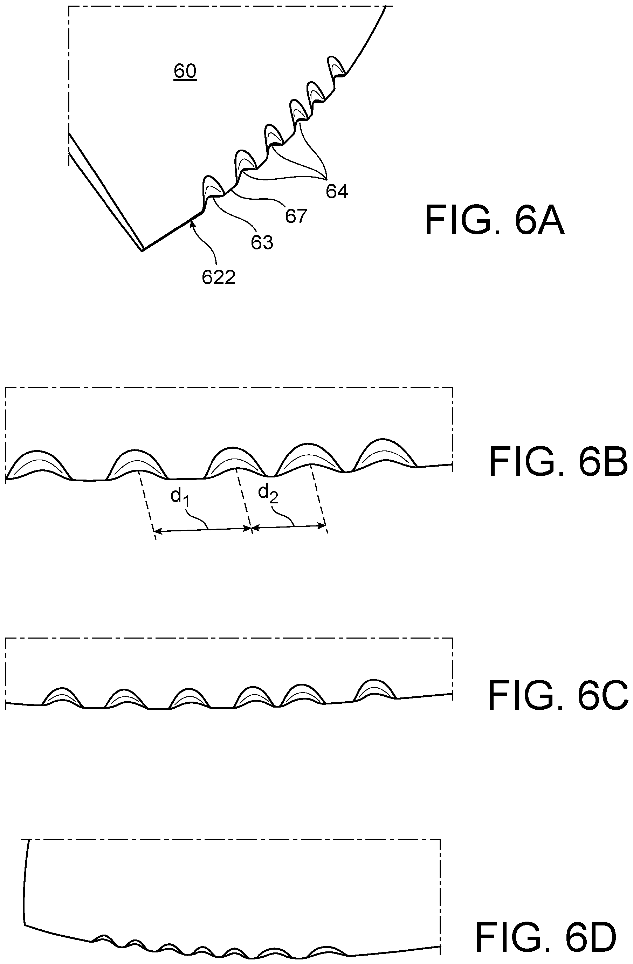

Another example of a blade 60 according to the invention will be explained in connection with figures 6A - 6D: the trailing edge 62 comprises a non-periodic series of patterns 64 extending over only part of the whole trailing edge; and/or it has a normal projection of the trailing edge on a plane P or P₀, as defined above. Alternatively, the patterns could extend over the whole or nearly the whole trailing edge.

The patterns along the trailing edge may not be regular as can be seen on figure 6B with distance d₁ being different from the distance d₂. It means that the extremum on the curve resulting from the projection of at least 30% of the trailing edge on a plane P or P₀ as defined herein may not be evenly distributed.

The patterns of figures 3A - 6D comprise waves or indentations or teeth. Other shapes or other examples of patterns may be possible.

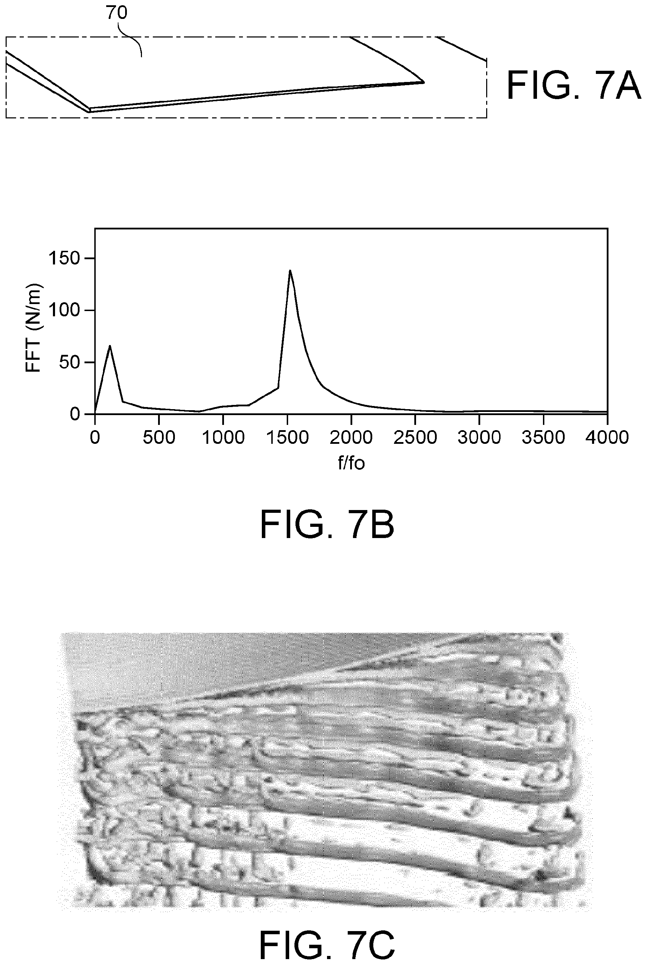

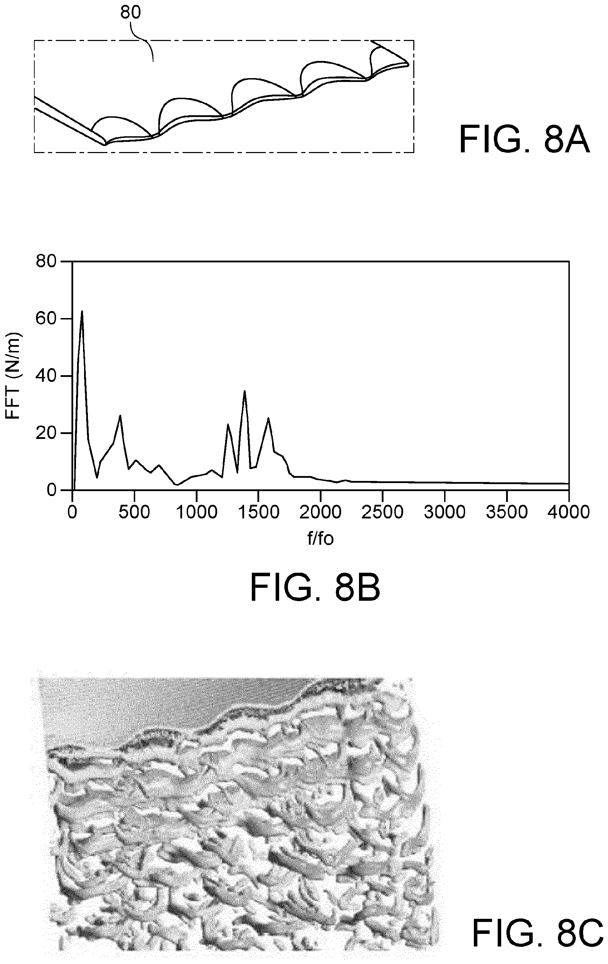

Figures 7A - 7C and 8A - 8C show comparative examples of a trailing edge 70 according to the prior art and a trailing edge 80 according to the invention.

In the prior art (figure 7A), the trailing edge 70 is straight. This usual shape may lead to well organized vortices downstream the trailing edge (figure 7C) associated to a noticeable corresponding peak frequency (see figure 7B) and associated to a high amplitude of the force applied on the profile

An example of a trailing edge 80 according to the invention is shown on figure 8A: it is periodic and extends over the whole trailing edge. The new shape of this trailing edge leads to disorganized vortices downstream the trailing edge (figure 8C) associated to wider range of frequencies (see figure 8B) and associated to a lower amplitude of the force applied on the profile compared to the usual shape (Figure 7).

A trailing edge according to the invention can be made by grinding and/or smoothing and/or polishing a trailing edge of a hydraulic piece which has just been fabricated, or of a hydraulic piece which is already being used (upon refurbishing a turbine for example), or by direct generation of the profile using any fabrication process like for example but not restricted to casting or printing manufacturing.

In the present application to hydraulic turbines, the inventors have evidenced that a strong reduction of the von Karman vortices is linked to the presence of a series of regular or irregular patterns along part of the trailing edge or along the whole length of the trailing edge.

Von Karman issues can also be met in other hydraulic profiles. The invention therefore also applies to stay vanes, guide vanes, valves of a hydraulic machine. For example a pattern according to the invention can be applied on a rear plate of a butterfly valve. Like the blades, these parts have a leading edge, a trailing edge and lateral sides (a suction side and a pressure side) between the leading edge and the trailing edge; water flows past the leading edge, then along the lateral sides, and leaves the piece at the trailing edge, where von Karman vortices may occur.

## Claims

1. Hydraulic component or piece of a hydraulic component, said component or piece having a pressure side and a suction side which extend between a leading edge (8) and a trailing edge (32, 42, 52, 62), at least one part of the trailing edge comprising a series of patterns (34, 44, 54, 64).

2. Hydraulic component or piece of a hydraulic turbine according to claim 1, said patterns comprising waves or indentations or teeth.

3. Hydraulic component or piece of a hydraulic turbine according to claim 1 or 2, the patterns being located on the whole trailing edge or on only part of it.

4. Hydraulic component or piece of a hydraulic turbine according to any of claims 1 to 3, the patterns having repetitive or periodic patterns (34, 44, 54).

5. Hydraulic component or piece of a hydraulic turbine according to any of claims 1 to 3, the patterns having non repetitive or non-periodic patterns (64).

6. Hydraulic component or piece of a hydraulic turbine according to any of claims 1 to 5, the normal projection of at least a portion, for example 30%, of the pressure side trailing edge on a plane (P, P₀) comprising several, for example at least 4, local extremum, said plane being:
- tangent to the pressure side at a point which is located at a distance of between 2% l and 15 % I from the trailing edge, I being the length of the component or piece, measured for example from the middle of the leading edge to the middle of the trailing edge;
- or being defined by 3 unaligned points of the pressure side located at a distance of between 2% I and 15 % I from the trailing edge, I being the length of the piece, measured for example from the middle of the leading edge to the middle of the trailing edge.

7. Hydraulic component or piece of a hydraulic component according to claim 6, said hydraulic component or piece comprising a blade (30, 40, 50, 60) of a runner, the distance d on the trailing edge between 2 neighbouring extremum (E₀, E₁) being in a range between 3×10⁻³ D and 3×10⁻¹ D, D being the diameter of the runner.

8. Hydraulic component or piece of a hydraulic turbine according to claim 6 or 7, said plane (P₀) being defined by 3 unaligned points (A, B, C) of the pressure side:
- the intersection between a plane normal to the trailing edge at O and the surface of the pressure surface defining a curve L1:
- point A being located on curve L1 at a distance l_{A} of between 2% I and 15 % I, for example 5% l, from point O;
- point B being located on curve L1 at a distance l_{B} (l_{B} > l_{A}) of between 2% I and 15 % I, for example 10% of the length I from point O;
- C being on the surface of the pressure side, at a distance of, for example, 5%, of the profile length I from the point A in the normal direction to the curve L1.

9. Hydraulic component or piece of a hydraulic turbine according to any of claims 1 to 8, said hydraulic component or piece comprising a blade (30, 40, 50, 60) or a stay vane or a guide vane, or a butterfly valve or any hydraulic profiles.

10. A hydraulic turbine comprising at least one hydraulic component or piece according to any of claims 1 to 9, said turbine being of the Francis or Kaplan or diagonal flow type or being a pump-turbine.

11. A method for improving the dynamic and vibratory behaviour of a hydraulic component or piece of a hydraulic turbine, said component or piece having a pressure side and a suction side which extend between a trailing edge (10) and a leading edge (8), said method comprising making a series of patterns (34, 44, 54, 64) on at least one part of the trailing edge of said hydraulic component or piece.

12. A method according to claim 11, said patterns comprising waves or indentations or teeth.

13. A method according to claim 11 or 12, the patterns:
- being located on the whole trailing edge or on only part of it;
- and/or having repetitive or periodic patterns (34, 44, 54) or having non repetitive or non-periodic patterns (64).

14. A method according to any of claims 11 to 13:
- said hydraulic component or piece comprising a blade (30, 40, 50, 60) or a stay vane or a guide vane, or a butterfly valve or any hydraulic profiles;
- and/or said turbine being of the Francis or Kaplan or diagonal flow type or being a pump-turbine.

15. A method according to any of claims 11 to 14, said patterns being made by grinding and/or smoothing and/or polishing of the trailing edge of said hydraulic component or piece.
